# EUROPEAN PATENT SPECIFICATION

(11) **EP 2 825 297 B1**
(45) Date of publication and mention of the grant of the patent: **01.02.2017**
(21) Application number: 13710739.7
(22) Date of filing: 06.03.2013
(51) Int. Cl.: B01D 67/00, B01D 71/68, B29B 15/12, B29C 65/00

(54) **REINFORCED THERMOPLASTIC ARTICLES, COMPOSITIONS FOR THE MANUFACTURE OF THE ARTICLES, METHODS OF MANUFACTURE, AND ARTICLES FORMED THEREFROM**
VERSTÄRKTEN THERMOPLASTISCHEN ARTIKEL, KOMPOSITIONEN FÜR DIE HERSTELLUNG DES ARTIKELS, HERSTELLUNGSMETHODEN, UND ARTIKEL DARAUS GEBILDETEN
ARTICLES THERMOPLASTIQUE RENFORCÉ COMPOSITIONS POUR LA FABRICATION DE CES ARTICLES ET ARTICLES AINSI FORMES

(30) Priority: 13.03.2012 US 201261610234 P
(43) Date of publication of application: 21.01.2015
(73) Proprietor: SABIC Global Technologies B.V., 4612 PX Bergen op Zoom (NL)
(72) Inventor: LOWERY, Daniel, Mt Vernon, IN 47620-9367 (US)
(74) Representative: Office Freylinger
(86) International application number: PCT/US2013/029333
(87) International publication number: WO 2013/138135

(56) References cited:
- EP-A1- 0 465 251
- EP-A2- 0 320 155
- EP-A2- 0 387 566
- EP-A2- 0 492 516
- DATABASE WPI Week 201135 Thomson Scientific, London, GB; AN 2011-E02271 XP002697810, & CN 201 743 362 U (SHANGHAI NEW UNION TEXTILE IMPORT) 16 February 2011 (2011-02-16)

## Description

### BACKGROUND OF THE INVENTION

This disclosure relates to reinforced thermoplastic articles, in particular fiber-reinforced polysulfone articles that can be thermoformed, compositions for the manufacture of the thermoformable articles, and methods of manufacture of the articles, and uses thereof.

Thermoplastic articles containing reinforcing fibers are being used to an increasing extent for the production of components used in the interior of vehicles such as commercial aircraft, ships, and trains. It is desirable for such materials, particularly where they are used in aircraft, to have excellent flame retardant properties and to release only low levels of heat and smoke when exposed to a flame. According to the Federal Aviation Regulations (FAR), specific flame retardant properties of interest for panels used in the interior of aircraft include, at minimum, a low heat release rate (referred to as the OSU 65/65 standard), low smoke density, and low toxicity of combustion products. These are often referred to as the flame-smoke-toxicity (FST) requirements for the aircraft interior panels. Many materials can only meet these requirements by adding additional layers to the panels, which adds to material cost, labor cost, and weight. Providing aesthetic finishes to the observable surfaces can require additional manual labor. In addition to meeting FST requirements, materials useful in manufacture of thermoplastic articles containing reinforcing fibers generally also should have good processability for forming the articles, and desirable physical properties such as attractive surface finishes, toughness (to minimize the propensity of the parts to crack during use or secondary operations), weatherability, and transparency where desired.

There accordingly remains a continuing need in the art for materials useful in manufacture of reinforced thermoplastic thermoformed articles that have a low heat release rate and low smoke density. It is also desirable for such materials to have combustion products with low toxicity. In addition, it would be advantageous if manufacture of the reinforced thermoformable articles from which the thermoformed articles are made were efficient and economical. Yet a further advantage would be for thermoformed articles to have one or more of toughness, weatherability, and chemical resistance and ease of cleaning.

### SUMMARY OF THE INVENTION

The invention relates to a composition for the manufacture of a porous, compressible article, the composition comprising a combination of: from 30 to 65 wt.% of reinforcing fibers, having average fiber length of from 5 to 75 millimeters, and average fiber diameter of from 5 to 125 micrometers; from 30 to 65 wt.% of polysulfone fibers, having average fiber length of from 5 to 75 millimeters, and average fiber diameter of from 5 to 125 micrometers; and from 2 to 20 wt.% of polymeric binder fibers, having average fiber length of from 2 millimeters to 25 millimeters, and average fiber diameter of from 5 to 50 micrometers; dispersed as a network in an aqueous solvent; wherein the polymeric binder fibers have a melting point lower than the polysulfone fibers...

In another embodiment, the invention relates to a method for forming a porous article, the method comprising: forming a layer comprising a suspension of the composition of claim 1 in a liquid; at least partially removing the liquid from the suspension to form a web; heating the web under conditions sufficient to remove any remaining liquid from the web and to melt the polymeric binder fibers but not the polysulfone; and cooling the heated web to form the porous article, wherein the porous article comprises a network of the reinforcing fibers and the polysulfone fibers in a matrix of the polymeric binder.

In another embodiment, the invention relates to a porous article comprising: a network of discontinuous, randomly oriented reinforcing fibers and a polysulfone fibers; bonded together by melted fibers of the polymer binder, obtained by heating the composition of claim 1 under conditions sufficient to remove any remaining liquid and to melt the polymeric binder fibers but not the polysulfone, and having an areal weight of from 90 to 500 g/m²..

In another embodiment, the invention relates to a method of forming a dual matrix composite, the method comprising: heating and compressing the porous article of claim 2 disposed on a carrier layer under conditions sufficient to melt the polysulfone fibers and consolidate the network; cooling the heated, compressed article and carrier layer under pressure to form the dual matrix composite comprising a network comprising a plurality of reinforcing fibers; and a matrix comprising melted and cooled polysulfone fibers and melted and cooled polymeric binder fibers, wherein the polymeric binder has a melt temperature lower than the polysulfone.

In another embodiment, the invention relates to a dual matrix, thermoformable composite, comprising a network comprising a plurality of reinforcing fibers; and a matrix comprising melted and cooled polysulfone fibers and melted and cooled polymeric binder fibers, obtained by heating the porous article of claim 2 under compression, to a temperature sufficient to melt the polysulfone, and thereby form the dual matrix composite.

In another embodiment, the invention relates to a method of forming an article, the method comprising: thermoforming the dual matrix composite to form the article.

In another embodiment, the invention relates to an article, comprising the thermoformed dual matrix composite.

### DETAILED DESCRIPTION OF THE INVENTION

The inventors hereof have developed a reinforced thermoplastic thermoformable article, referred to herein as a "dual matrix composite," which can be thermoformed into an article having a low heat release rate and low smoke density. In an embodiment, the combustion products of the thermoformable article have low toxicity. To manufacture the dual matrix composite, a porous mat is formed from a composition containing a combination of reinforcing fibers, polysulfone fibers, and polymeric binder fibers. The polymeric binder fibers has a lower melting temperature than the polysulfone fibers, allowing the porous mat to be formed by heating the combination of the three fibrous components at a temperature effective to melt the polymeric binder fibers, but not the polysulfone fibers. The polymer binder forms a first matrix that provides strength to the mat once cooled. The porous mat is then consolidated by heating, under compression, to a temperature sufficient to melt the polysulfone, form a second matrix, and thereby form the dual matrix composite. Use of the combination of the three fibrous components allows uniform mixing and distribution of the components in the porous mat, and can provide mats having thinner profiles. The selected polymers are also sufficiently stable to survive repeated heating to processing or forming temperature with minimal oxidation. The properties and composition of the porous mat can be varied according to need, for example, by varying the type, dimensions, and amount of reinforcing fiber and polymeric binder. Importantly, the polymeric binder does not degrade the FST properties of the final thermoformed products, and the final thermoformed product meets all of the required FST properties without requiring any additional layers or additives.

The dual matrix composites formed from the porous mats have a degree of loft of 3 or more, with excellent uniformity across the thickness of the mat. The dual matrix composites can be thermoformed, for example, to provide an article. The dual matrix composite can thus be used in the manufacture of components that meet the FAR requirements for low heat, low smoke density, and/or low levels of toxic combustion byproducts. In an embodiment, the dual matrix composite satisfies the following criteria: (1) a peak heat release of less than 65 kW/m², as measured by FAR 25.853 (OSU test); (2) a total heat release at 2 minutes of less than or equal to 65 kW*min/m² as measured by FAR 25.853 (OSU test); and an NBS optical smoke density of less than 200 when measured at 4 minutes, based on ASTM E-662 (FAR/JAR 25.853).

The singular forms "a," "an," and "the" include plural referents unless the context clearly dictates otherwise. "Or" means "and/or." The term "combination" is inclusive of blends, mixtures, alloys, reaction products, and the like. The term "and a combination thereof" is inclusive of the named component and/or other components not specifically named that have essentially the same function. Other than in the operating examples or where otherwise indicated, all numbers or expressions referring to quantities of ingredients, reaction conditions, and the like, used in the specification and claims are to be understood as modified in all instances by the term "about." Various numerical ranges are disclosed in this patent application. Because these ranges are continuous, they include every value between the minimum and maximum values. The endpoints of all ranges reciting the same characteristic or component are independently combinable and inclusive of the recited endpoint. Unless expressly indicated otherwise, the various numerical ranges specified in this application are approximations. The term "from more than 0 to" an amount means that the named component is present in some amount more than 0, and up to and including the higher named amount.

"Melt temperature" as used herein refers to the melt temperature of crystalline polymers, or the glass transition or softening temperature of amorphous polymers.

Compounds are described herein using standard nomenclature. A dash ("-") that is not between two letters or symbols is used to indicate a point of attachment for a substituent. For example, -CHO is attached through the carbon of the carbonyl (C=O) group. As used herein, the term "alkyl" refers to a straight or branched chain monovalent hydrocarbon group; "alkylene" refers to a straight or branched chain divalent hydrocarbon group; "alkylidene" refers to a straight or branched chain divalent hydrocarbon group, with both valences on a single common carbon atom; "alkenyl" refers to a straight or branched chain monovalent hydrocarbon group having at least two carbons joined by a carbon-carbon double bond; "cycloalkyl" refers to a non-aromatic monovalent monocyclic or multicyclic hydrocarbon group having at least three carbon atoms, "cycloalkylene" refers to a non-aromatic alicyclic divalent hydrocarbon group having at least three carbon atoms, with at least one degree of unsaturation; "aryl" refers to an aromatic monovalent group containing only carbon in the aromatic ring or rings; "arylene" refers to an aromatic divalent group containing only carbon in the aromatic ring or rings; "alkylaryl" refers to an aryl group that has been substituted with an alkyl group as defined above, with 4-methylphenyl being an exemplary alkylaryl group; "arylalkyl" refers to an alkyl group that has been substituted with an aryl group as defined above, with benzyl being an exemplary arylalkyl group; "acyl" refers to a an alkyl group as defined above with the indicated number of carbon atoms attached through a carbonyl carbon bridge (-C(=O)-); "alkoxy" refers to an alkyl group as defined above with the indicated number of carbon atoms attached through an oxygen bridge (-O-); and "aryloxy" refers to an aryl group as defined above with the indicated number of carbon atoms attached through an oxygen bridge (-O-).

Unless otherwise indicated, each of the foregoing groups can be unsubstituted or substituted, provided that the substitution does not significantly adversely affect synthesis, stability, or use of the compound. The term "substituted" as used herein means that any at least one hydrogen on the designated atom or group is replaced with another group, provided that the designated atom's normal valence is not exceeded. When the substituent is oxo (i.e., =O), then two hydrogens on the atom are replaced. Combinations of substituents and/or variables are permissible provided that the substitutions do not significantly adversely affect synthesis or use of the compound.

As described above, a composition having three different types of fibers is used to form a porous mat, which in turn is consolidated to provide the dual matrix composite. The compositions for forming the porous mat include a plurality of reinforcing fibers; a plurality of polysulfone fibers; and a plurality of polymeric binder fibers, wherein the polymeric binder fibers have a melting point lower than the polysulfone fibers.

The reinforcing fibers can be metal fibers (e.g., stainless steel fibers), metallized inorganic fibers, metallized synthetic fibers, glass fibers (e.g., lime-aluminum borosilicate glass that is soda-free ("E" glass), A, C, ECR, R, S, D, or NE glasses), graphite fibers, carbon fibers, ceramic fibers, mineral fibers, basalt fibers, polymer fibers having a melt temperature at least 50 °C, at least 100 °C, or at least 150 °C higher than the polyimide, or a combination thereof. The reinforcing fibers generally have a modulus higher than 10 GigaPascals (GPa). In an embodiment, the reinforcing fibers are glass fibers, a compatible non-glass material, or a combination thereof. As used herein, the term "compatible non-glass material" refers to a non-glass material having at least surface adhesion and wetting properties similar to those of glass, which will allow for uniform dispersion with the glass fibers. ,

The reinforcing fibers can be provided in the form of monofilament or multifilament fibers; non-woven fibrous reinforcements such as continuous strand mat, chopped strand mat, tissues, papers, and felts or the like. In an embodiment, the reinforcing fibers are discontinuous, in the form of single discrete fibers. Where glass fibers are used and are received in the form of chopped strand bundles, the bundles can be broken down into single fibers before the structure is formed. The discontinuous reinforcing fibers can be 5 to 75 millimeters (mm) in the longest dimension, specifically 6 to 60 mm, more specifically 7 to 50 mm, and still more specifically 10 to 40 mm in the longest dimension. In addition, the discontinuous reinforcing fibers can be 5 to 125 micrometers (µm), specifically 10 to 100 micrometers.

The polysulfone fibers contribute one type of polymer to the dual polymer matrix. A wide variety of different polysulfones can be used, provided that the selected polysulfone does not adversely affect the heat release, smoke density, and other desired properties of the dual matrix composites. In an embodiment, the polysulfone comprises more than one arylene ether sulfone unit selected from 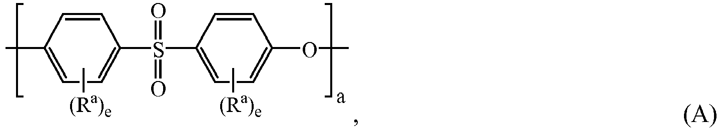 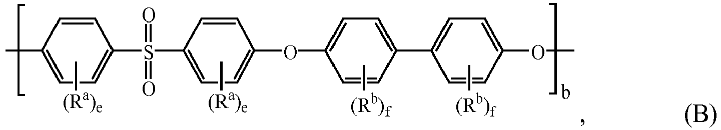 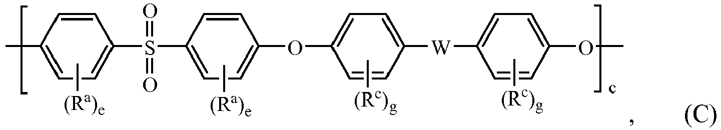 and combinations thereof, wherein R^{a}, R^{b}, and R^{c} are each independently selected from a halogen atom, a nitro group, a cyano group, a C₁-C₆ aliphatic group, and a C₃-C₁₂ aromatic group, e, f, and g are each independently 0-4; W is a C₁-C₁₂ aliphatic group, a C₃-C₁₂ cycloaliphatic group, or a C₆-C₁₈ aromatic group; and a, b, and c represent the mole fraction of each unit in the polymer, and can each be from 0 to 1 provided that the total of a + b + c = 1.

In a specific embodiment R^{a}, R^{b}, and R^{c} are each independently a halogen atom or a C₁-C₃ aliphatic group; e, f, and g are each independently 0-2; and W is a straight or branched chain C₁-C₆ alkylene or a C₃-C₁₂ cycloaliphatic group.

In a specific embodiment, the polysulfone comprises more than one arylene ether sulfone unit selected from 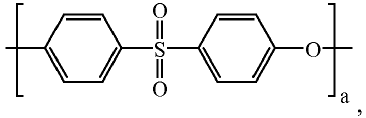 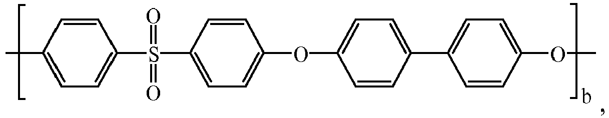 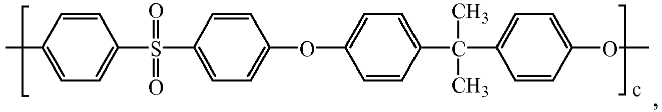 or a combination thereof, wherein a, b, and c represent the mole fraction of each unit in the polymer, and can each be from 0 to 1 provided that the total of a + b + c = 1. When a=1, the polymers are often referred to as polyethersulfones (PES). When b=1, the polymers are often referred to as polyphenylenesulfones (PPS). When c=1, the polymers are often referred to as Bisphenol A polysulfones, which are commercially available from Solvay under the trade name UDEL 1700.

The polysulfone fibers can be 5 to 75 millimeters (mm) in the longest dimension, specifically 6 to 60 mm, more specifically 7 to 50 mm, and still more specifically 10 to 40 mm in the longest dimension. In addition, the discontinuous reinforcing fibers can be 5 to 125 micrometers (µm), specifically 10 to 100 micrometers.

The polymer binder fibers contribute another polymer to the dual polymer matrix. The polymer binder melts during formation of the porous mat, and is therefore selected to have a melt temperature lower than the melt temperature of the polysulfone. For example, the polymer binder can have a melt temperature that is at least 10°C lower than the melt temperature of the polyimide, specifically at least 20°C lower, even more specifically at least 20°C lower than the melt temperature of the polyimide. In an embodiment, the polymer binder has a melt temperature that is 10 to 180°C lower than the polysulfone. The polymer binder is further selected so as to be compatible with the polysulfone and the reinforcing fibers. The polymer binder further preferably is selected so as to not contribute significantly to the heat release, optical smoke density, and/or combustion products toxicity of the dual matrix composites. Possible polymer binders that can meet these criteria include thermoplastic polyolefin blends, polyvinyl polymers, butadiene polymers, acrylic polymers, silicone polymers, polyamides, polyesters, polycarbonates, polyestercarbonates, polystyrenes, polysulfones, polyarylsulfones, polyphenylene ethers polyphenylene-sulphide, polyethers, polyetherketones, and polyethersulfones, or a combination thereof. In an embodiment, the polymer binder is a polyimide, a polysiloxane-polyestercarbonate copolymer, a polyester, a polyester-polyetherimide blend, a bicomponent fiber of any of the foregoing, or a combination thereof.

A wide variety of polyimides can be used as the polymer binder fibers, depending on the availability, melt temperature, and desired characteristics of the dual matrix composites. As used herein, "polyimides" is inclusive of polyetherimides and polyetherimide sulfones. In a specific embodiment, the polyetherimide comprise more than 1, specifically 10 to 1,000, or more specifically, 10 to 500 structural units, of formula (1) 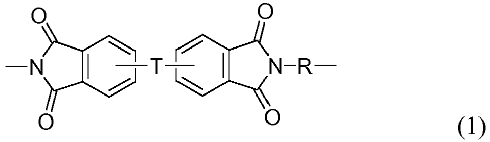 wherein T is -O- or a group of the formula -O-Z-O- wherein the divalent bonds of the -O- or the -O-Z-O- group are in the 3,3', 3,4', 4,3', or the 4,4' positions and Z is a divalent group that includes, but is not limited to, divalent moieties of formula (2) 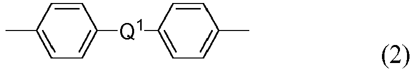 wherein Q¹ is a divalent moiety such as -O-, -S-, -C(O)-, -SO₂-, -SO-, -C_{y}H_{2y}- and halogenated derivatives thereof, including perfluoroalkylene groups, y being an integer from 1 to 5; and R is a divalent group of formulas (3) 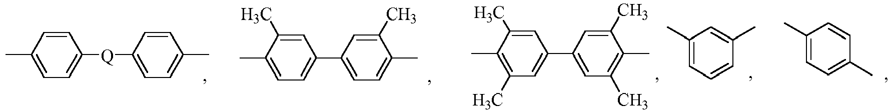 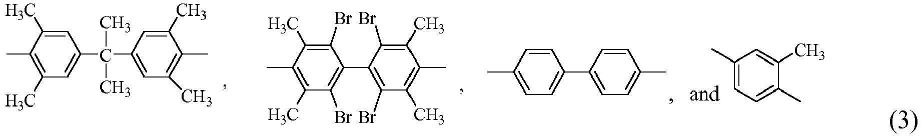 wherein Q is a divalent moiety comprising -O-, -S-, -C(O)-, -SO₂-, -SO-, -C_{y}H_{2y}- and halogenated derivatives thereof, including perfluoroalkylene groups as defined above, y being an integer from 1 to 20..

In another specific embodiment, the polyetherimide sulfones can comprise more than 1, specifically 10 to 1,000, or more specifically, 10 to 500 structural units of formula (4) 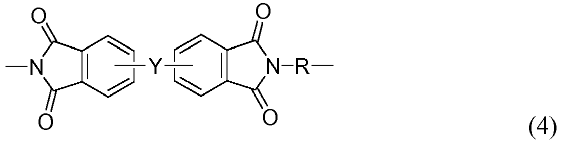 wherein Y is -O-, -SO₂-, or a group of the formula -O-Z-O- wherein the divalent bonds of the -O-, SO₂-, or the -O-Z-O- group are in the 3,3', 3,4', 4,3', or the 4,4' positions, wherein Z is a divalent group of formula (2) as defined above and R is a divalent group of formula (3) as defined above, provided that greater than 50 mole% of the sum of moles Y + moles R in formula (1) contain -SO₂- groups.

The polyetherimide and polyetherimide sulfones can be prepared by various methods, including, but not limited to, the reaction of an aromatic bisanhydride of the formula (5) or (6) 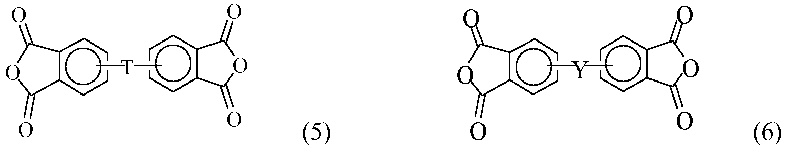 with an organic diamine of the formula (7)

H₂N-R-NH₂ (7)

wherein R, T, and Y are as defined above.

Illustrative examples of specific aromatic bisanhydrides of formula (5) include: 2,2-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; and 4-(2,3-dicarboxyphenoxy)-4'-(3,4-dicarboxyphenoxy)benzophenone dianhydride. Combinations comprising at least one of the foregoing can be used.

Illustrative examples of specific aromatic bisanhydrides containing sulfone groups of formula (6) include: 4,4'-bis(3,4-dicarboxyphenoxy)diphenyl sulfone dianhydride; 4,4'-bis(2,3-dicarboxyphenoxy)diphenyl sulfone dianhydride; and 4-(2,3-dicarboxyphenoxy)-4'-(3,4-dicarboxyphenoxy)diphenyl sulfone dianhydride. Combinations comprising at least one of the foregoing can be used. In addition, the polyetherimide sulfones can be prepared using a combination of bisanhydrides of formula (5) and formula (6).

Illustrative examples of amine compounds of formula (7) include: ethylenediamine, propylenediamine, trimethylenediamine, diethylenetriamine, triethylenetetramine, hexamethylenediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3, 5-diethylphenyl) methane, bis(4-aminophenyl) propane, 2,4-bis(b-amino-t-butyl) toluene, bis(p-b-amino-t-butylphenyl) ether, bis(p-b-methyl-o-aminophenyl) benzene, bis(p-b-methyl-o-aminopentyl) benzene, 1, 3-diamino-4-isopropylbenzene, bis(4-aminophenyl) ether and 1,3-bis(3-aminopropyl) tetramethyldisiloxane. Mixtures of these amines can be used.

Illustrative examples of amine compounds of formula (7) containing sulfone groups include but are not limited to, diamino diphenyl sulfone (DDS) and bis(aminophenoxy phenyl) sulfones (BAPS). Combinations comprising any of the foregoing amines can be used.

In an embodiment, the polyetherimide comprises structural units of formula (1) wherein each R is independently p-phenylene or m-phenylene or a mixture comprising at least one of the foregoing; and T is group of the formula -O-Z-O- wherein the divalent bonds of the -O-Z-O- group are in the 3,3' positions, and Z is a divalent group of formula(8)

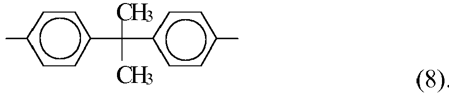

The polyetherimides and polyetherimide sulfones have a weight average molecular weight (Mw) of 5,000 to 80,000 Daltons. Weight average molecular weight can be measured by gel permeation chromatography, using a polystyrene standard. Representative polyetherimides are those produced under the ULTEM® trademark, including, but not limited to ULTEM® 1000 (number average molecular weight (Mn) 21,000 g/mole; Mw 54,000 g/mole; dispersity 2.5), ULTEM® 1010 (Mn 19,000 g/mole; Mw 47,000 g/mole; dispersity 2.5) and ULTEM 9011 (Mn 19,000 g/mole; Mw 47,000 g/mole; dispersity 2.5) resin by Sabic Innovative Materials, Pittsfield, Massachusetts.

The polysiloxane-polyestercarbonate copolymer comprises siloxane units and arylate ester units that can comprise aromatic carbonate units.

The siloxane units are present in the copolymer in polysiloxane blocks, which comprise repeating siloxane units as in formula (10) 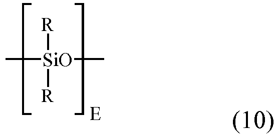 wherein each R is independently the same or different C₁₋₁₃ monovalent organic group. For example, R can be a C₁-C₁₃ alkyl, C₁-C₁₃ alkoxy, C₂-C₁₃ alkenyl group, C₂-C₁₃ alkenyloxy, C₃-C₆ cycloalkyl, C₃-C₆ cycloalkoxy, C₆-C₁₄ aryl, C₆-C₁₀ aryloxy, C₇-C₁₃ arylalkyl, C₇-C₁₃ aralkoxy, C₇-C₁₃ alkylaryl, or C₇-C₁₃ alkylaryloxy. The foregoing groups can be fully or partially halogenated with fluorine, chlorine, bromine, or iodine, or a combination thereof. In an embodiment, where a transparent polysiloxane-polycarbonate is desired, R is unsubstituted by halogen. Combinations of the foregoing R groups can be used in the same copolymer.

The value of E in formula (10) can vary depending on the type and relative amount of each component in the composition, the desired properties of the, and like considerations. Generally, E has an average value of 5 to 50, specifically 5 to about 40, more specifically 10 to 30. In an embodiment, the polysiloxane blocks are of formula (11) or (12) 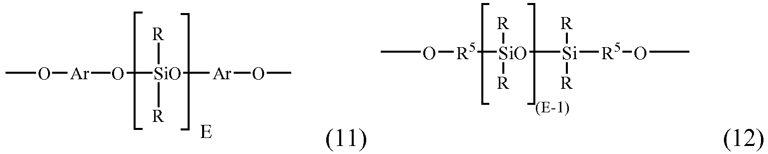 wherein E is as defined above and each R can be the same or different, and is as defined above. Ar can be the same or different, and is a substituted or unsubstituted C₆-C₃₀ arylene group, wherein the bonds are directly connected to an aromatic moiety. Ar groups in formula (11) can be derived from a C₆-C₃₀ dihydroxyarylene compound of formula (14) below, for example 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations comprising at least one of the foregoing compounds can also be used. Each R⁵ is independently a divalent C₁-C₃₀ organic group, for example a divalent C₂-C₈ aliphatic group.

In a specific embodiment, the polysiloxane blocks are of formula (13): 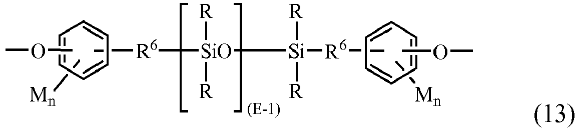 wherein R and E are as defined above; R⁶ is a divalent C₂-C₈ aliphatic group; each M can be the same or different, and can be a halogen, cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkylaryl, or C₇-C₁₂ alkylaryloxy, wherein each n is independently 0, 1, 2, 3, or 4. In an embodiment, M is bromo or chloro, an alkyl group such as methyl, ethyl, or propyl, an alkoxy group such as methoxy, ethoxy, or propoxy, or an aryl group such as phenyl, chlorophenyl, or tolyl; R² is a dimethylene, trimethylene or tetramethylene group; and R is a C₁₋₈ alkyl, haloalkyl such as trifluoropropyl, cyanoalkyl, or aryl such as phenyl, chlorophenyl or tolyl. In another embodiment, R is methyl, or a combination of methyl and trifluoropropyl, or a combination of methyl and phenyl. In still another embodiment, M is methoxy, n is one, R² is a divalent C₁-C₃ aliphatic group, and R is methyl.

The polysiloxane-polyestercarbonate copolymer further comprises polyester blocks, in particular polyarylate ester blocks that optionally comprise carbonate units. The arylate ester units of the polyarylate ester blocks can be derived from the reaction product of one equivalent of an isophthalic acid derivative and/or terephthalic acid derivative with an aromatic dihydroxy compound of the formula HO-R¹-OH, in particular of formula (14) or (15):

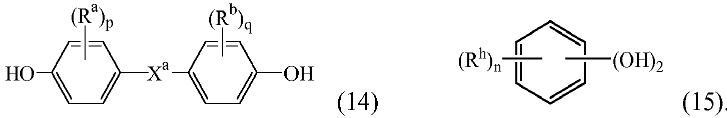

In formula (14), R^{a} and R^{b} each independently a halogen atom or a monovalent hydrocarbon group; p and q are each independently integers of 0 to 4; and X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group. In an embodiment, the bridging group X^{a} is -C(R^{c})(R^{d})- or -C(=R^{e}) (wherein R^{c} and R^{d} each independently is a hydrogen atom or a monovalent linear or cyclic hydrocarbon group and R^{e} is a divalent hydrocarbon group), a single bond, -O-, -S-, -S(O)-, -S(O)₂-, -C(O)-, or a C₁₋₁₈ organic group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. In an embodiment, p and q is each 1, and R^{a} and R^{b} are each a C₁₋₃ alkyl group, specifically methyl, disposed meta to the hydroxy group on each arylene group. In another embodiment, X^{a} is a C₁₋₁₈ alkylene group, a C₃₋₁₈ cycloalkylene group, a fused C₆₋₁₈ cycloalkylene group, or a group of the formula -B¹-W-B²- wherein B¹ and B² are the same or different C₁₋₆ alkylene group and W is a C₃₋₁₂ cycloalkylidene group or a C₆₋₁₆ arylene group.

In formula (15), wherein each R^{h} is independently a halogen atom, a C₁₋₁₀ hydrocarbyl such as a C₁₋₁₀ alkyl group, a halogen-substituted C₁₋₁₀ alkyl group, a C₆₋₁₀ aryl group, or a halogen-substituted C₆₋₁₀ aryl group, and n is 0 to 4. The halogen is usually bromine.

Illustrative examples of specific aromatic dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bins(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or combinations comprising at least one of the foregoing dihydroxy compounds.

Specific examples of bisphenol compounds of formula (14) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Specific examples of compounds of formula (15) include 5-methyl resorcinol, hydroquinone, and 2-methyl hydroquinone. Combinations comprising at least one of the foregoing dihydroxy compounds can also be used.

The polyarylate ester blocks can comprise 100 mole % (mol%) of arylate ester units as illustrated in formula (16): 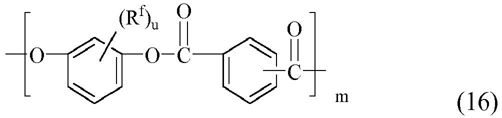 wherein R^{f} and u are previously defined for formula (15), and m is greater than or equal to 4. In an embodiment, m is 4 to 50, specifically 5 to 30, more specifically 5 to 25, and still more specifically 10 to 20. Also in an embodiment, m is less than or equal to 100, specifically less than or equal to 90, more specifically less than or equal to 70, and still more specifically less than or equal to 50. It will be understood that the low and high endpoint values for m are independently combinable. In another embodiment, the molar ratio of isophthalate to terephthalate can be about 0.25:1 to about 4.0:1.

Exemplary arylate ester units are aromatic polyester units such as isophthalate-terephthalate-resorcinol ester units, isophthalate-terephthalate-bisphenol A ester units, or a combination thereof. Specific arylate ester units include poly(isophthalate-terephthalate-resorcinol) esters, poly(isophthalate-terephthalate-bisphenol-A) esters , poly[(isophthalate-terephthalate-resorcinol) ester-co-(isophthalate-terephthalate-bisphenol-A)] ester, or a combination thereof. In an embodiment, a useful arylate ester unit is a poly(isophthalate-terephthalate-resorcinol) ester. In an embodiment, the arylate ester unit comprises isophthalate-terephthalate-resorcinol ester units in an amount greater than or equal to 95 mol%, specifically greater than or equal to 99 mol%, and still more specifically greater than or equal to 99.5 mol% based on the total number of moles of ester units in the polyarylate unit. In another embodiment, the arylate ester units are not substituted with non-aromatic hydrocarbon-containing substituents such as, for example, alkyl, alkoxy, or alkylene substituents.

Alternatively, the polyarylate ester blocks are polyestercarbonate blocks that comprise arylate ester units and carbonate units shown in formula (17): 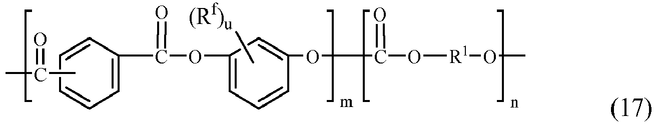 wherein R^{f}, u, and m are as defined in formula (16), each R¹ is independently an aromatic dihydroxy compound of the formula HO-R¹-OH, in particular of formula (14) or (15), and n is greater than or equal to one. In an embodiment, m is from 3 to 50, specifically from 5 to 25, and more specifically from 5 to 20; and n is less than or equal to 50, specifically less than or equal to 25, and more specifically less than or equal to 20. It will be understood that the endpoint values for n are independently combinable. In an embodiment, m is from 5 to 75, specifically from 5 to 30, and more specifically from 10 to 25, and n is less than 20. In a specific embodiment, m is 5 to 75, and n is 3 to 50; or m is 10 to 25, and n is 5 to 20. In an embodiment, the molar ratio of the isophthalate-terephthalate ester units to the carbonate units in the polyestercarbonate block can be 100:0 to 50:50, specifically 95:5 to 60:40, more specifically 90:10 to 70:30.

In a specific embodiment, the polyestercarbonate unit comprises bisphenol carbonate units of formula (18) (derived from bisphenols of formula (14) and/or resorcinol carbonate units of formula (19) (derived from resorcinols of formula (15): 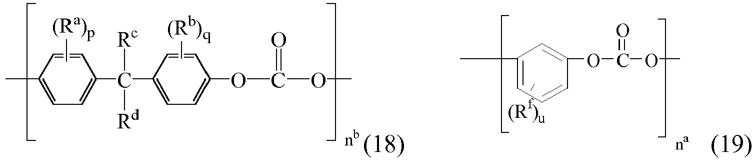 wherein R^{a} and R^{b} are each individually C₁₋₈ alkyl, R^{c} and R^{d} are individually C₁₋₈ alkyl or C₁₋₈ cycloalkylene, p and q are 0 to 4, and n^{b} is greater than or equal to one; and wherein R^{f} and u are as described above, and n^{a} is greater than or equal to 1. The polyestercarbonate units comprise a molar ratio of bisphenol carbonate units of formula (18) to resorcinol carbonate units of formula (19) of 0:100 to 99:1, specifically 20:80 to 80:20. In a specific embodiment, the polyestercarbonate blocks are derived from resorcinol (i.e., 1,3-dihydroxybenzene), or a combination comprising resorcinol and bisphenol-A, and more specifically, the polyestercarbonate block is a poly(isophthalate-terephthalate-resorcinol ester)-co-(resorcinol carbonate)-co-(bisphenol-A carbonate).

In an embodiment, the polyestercarbonate blocks of the polysiloxane-polyestercarbonate copolymer consist of 50 to 100 mol% of arylate ester units, specifically 58 to 90 mol% arylate ester units; 0 to 50 mol% aromatic carbonate units (e.g., resorcinol carbonate units, bisphenol carbonate units and other carbonate units such as aliphatic carbonate units); 0 to 30 mol% resorcinol carbonate units, specifically 5 to 20 mol% resorcinol carbonate units; and 0 to 35 mol% bisphenol carbonate units, specifically 5 to 35 mol% bisphenol carbonate units.

The polyestercarbonate unit can have an M_{w} of 2,000 to 100,000 g/mol, specifically 3,000 to 75,000 g/mol, more specifically 4,000 to 50,000 g/mol, more specifically 5,000 to 35,000 g/mol, and still more specifically 17,000 to 30,000 g/mol. Molecular weight determinations are performed using GPC using a crosslinked styrene-divinyl benzene column, at a sample concentration of 1 milligram per milliliter, and as calibrated with polycarbonate standards. Samples are eluted at a flow rate of about 1.0 ml/min with methylene chloride as the eluent.

The polysiloxane-polyestercarbonate copolymers can be manufactured by methods known in the art, for example reaction of the corresponding dihydroxy compounds of formulas (11), (12), and (13) with dicarboxylic acid derivatives and dihydroxy compounds of formulas (14) and (15) by different methods such as solution polymerization, interfacial polymerization, and melt polymerization. For example, the polysiloxane-polyestercarbonate copolymer can be prepared by interfacial polymerization, such as by the reaction of a diacid derivative, a difunctional polysiloxane polymer, a dihydroxy aromatic compound, and where desired, a carbonyl source, in a biphasic medium comprising an immiscible organic phase and aqueous phase. The order and timing of addition of these components to the polymerization reaction can be varied to provide a polysiloxane-polyestercarbonate copolymer having different distributions of the polysiloxane blocks in the polymer backbone. The polysiloxane can be distributed within the ester units in the polyester units, the carbonate units in the polycarbonate units, or both. Proportions, types, and amounts of the reaction ingredients can be selected by one skilled in the art to provide polysiloxane-polyestercarbonate copolymers having specific desirable physical properties for example, heat release rate, low smoke, low toxicity, haze, transparency, molecular weight, polydispersity, glass transition temperature, impact properties, ductility, melt flow rate, and weatherability.

In an embodiment, the polysiloxane-polyestercarbonate copolymer can comprise siloxane units in an amount of 0.5 to 20 mol%, specifically 1 to 10 mol% siloxane units, based on the combined mole percentages of siloxane units, arylate ester units, and optional carbonate units, and provided that siloxane units are provided by polysiloxane units covalently bonded in the polymer backbone of the polysiloxane-polyestercarbonate copolymer composition. The polysiloxane-polyestercarbonate copolymer comprises siloxane units in an amount of 0.2 to 10 weight percent (wt%), specifically 0.2 to 6 wt%, more specifically 0.2 to 5 wt%, and still more specifically 0.25 to 2 wt%, based on the total weight of the polysiloxane-polyestercarbonate copolymer, with the proviso that the siloxane units are provided by polysiloxane units covalently bonded in the polymer backbone of the polysiloxane-polyestercarbonate copolymer. In another embodiment, the copolymer further comprises 0.2 to 10 wt% siloxane units, 50 to 99.8 wt% ester units, and 0 or more than 0 to 49.85 wt% carbonate units; or 0.3 to 3 wt% polysiloxane units, 60 to 96.7 wt% ester units, and 3 to 40 wt% carbonate units, wherein the combined weight percentages of the polysiloxane units, ester units, and carbonate units is 100 wt% of the total weight of the polysiloxane-polyestercarbonate copolymer composition.

The polysiloxane-polyestercarbonate copolymers can have an intrinsic viscosity, as determined in chloroform at 25°C, of 0.3 to 1.5 deciliters per gram (dl/g), specifically 0.45 to 1.0 dl/g. The polysiloxane-polyestercarbonate copolymers can have a weight average molecular weight (M_{w}) of 10,000 to 100,000 g/mol, as measured by gel permeation chromatography (GPC) using a crosslinked styrene-divinyl benzene column, at a sample concentration of 1 milligram per milliliter, and as calibrated with polycarbonate standards.

In an embodiment, the polysiloxane-polyestercarbonate copolymer has flow properties described by the melt volume flow rate (MVR), which measures the rate of extrusion of a thermoplastic polymer through an orifice at a prescribed temperature and load. Polysiloxane-polyestercarbonate copolymers suitable for use can have an MVR, measured at 300°C under a load of 1.2 kg according to ASTM D1238-04, of 0.5 to 80 cubic centimeters per 10 minutes (cc/10 min). In a specific embodiment, an exemplary polycarbonate has an MVR measured at 300°C under a load of 1.2 kg according to ASTM D1238-04, of 0.5 to 100 cc/10 min, specifically 1 to 75 cc/10 min, and more specifically 1 to 50 cc/10 min. Combinations of polycarbonates of different flow properties can be used to achieve the overall desired flow property. The polysiloxane-polyestercarbonate copolymer can have a T_{g} of less than or equal to 165°C, specifically less than or equal to 160°C, and more specifically less than or equal to 155°C. The polysiloxane-polyestercarbonate copolymer can have a Tg for the polycarbonate unit of greater than or equal to 115°C, specifically greater than or equal to 120°C. In an embodiment, the polysiloxane-polyestercarbonate copolymer has a melt volume rate (MVR) of 1 to 30 cc/10 min, specifically 1 to 20 cc/10 min., when measured at 300°C under a load of 1.2 kg according to ASTM D1238-04, and a Tg of 120 to 160°C, specifically 125 to 155°C, and still more specifically 130 to 150°C.

Still further in an embodiment, the polysiloxane-polyestercarbonate copolymer composition has a 2 minute integrated heat release rate of less than or equal to 65 kilowatt-minutes per square meter (kW-min/m²) and a peak heat release rate of less than 65 kilowatts per square meter (kW/m²) as measured using the method of FAR F25.4, in accordance with Federal Aviation Regulation FAR 25.853 (d). Polysiloxane-polyestercarbonate copolymers are commercially available from SABIC, Pittsfield, MA.

Prior to being formed into fibers, the polysulfones and/or binder polymers can be formulated with various additives ordinarily incorporated into polymer compositions of this type, with the proviso that the additives are selected so as to not significantly adversely affect the desired properties of the fibers. Exemplary additives include fillers, catalysts (for example, to facilitate reaction between an impact modifier and the polyester), antioxidants, thermal stabilizers, light stabilizers, ultraviolet light (UV) absorbing additives, quenchers, plasticizers, lubricants, mold release agents, antistatic agents, visual effect additives such as dyes, pigments, and light effect additives, flame resistances, anti-drip agents, and radiation stabilizers. Combinations of additives can be used. The foregoing additives (except any fillers) are generally present in an amount from 0.005 to 20 wt.%, specifically 0.01 to 10 wt.%, based on the total weight of the composition.

In a specific embodiment, certain flame retarding agents are excluded from the compositions, in particular flame retardants that include phosphorus, bromine, and/or chlorine. Non-brominated and non-chlorinated phosphorus-containing flame retardants can be preferred in certain applications for regulatory reasons, for example organic phosphates. In another specific embodiment, inorganic flame retardants are excluded from the compositions, for example salts of C₁₋₁₆ alkyl sulfonate salts such as potassium perfluorobutane sulfonate (Rimar salt), potassium perfluorooctane sulfonate, tetraethyl ammonium perfluorohexane sulfonate, and potassium diphenylsulfone sulfonate, and the like; salts formed by reacting for example an alkali metal or alkaline earth metal (for example lithium, sodium, potassium, magnesium, calcium and barium salts) and an inorganic acid complex salt, for example, an oxo-anion, such as alkali metal and alkaline-earth metal salts of carbonic acid, such as Na₂CO₃, K₂CO₃, MgCO₃, CaCO₃, and BaCO₃ or fluoro-anion complexes such as Li₃AlF₆, BaSiF₆, KBF₄, K₃AlF₆, KAlF₄, K₂SiF₆, and/or Na₃AlF₆ or the like.

The polysulfone and polymer binder are formed into fibers by means known in the art. These fibers, together with the reinforcing fibers are combined to provide a composition for the production of a porous article such as a mat. Consolidation of the porous article under heat and pressure provides a dual matrix composite that can then be thermoformed to provide articles useful in the manufacture of interior aircraft panels, for example.

In particular, a composition for the manufacture of a porous, compressible article such as a mat includes a combination of a plurality of reinforcing fibers; a plurality of polysulfone fibers; and a plurality of polymeric binder fibers wherein the polymeric binder fibers have a melting point lower than the polysulfone fibers. The composition is thermally treated to selectively melt and flow the polymer binder fibers such that the polymer binder adheres adjoining fibers together upon cooling, to produce a mat containing a network of discontinuous, randomly oriented reinforcing fibers and polysulfone fibers bonded together using melted fibers of the polymer binder. The porous mat is then thermally treated under pressure to melt and flow the polysulfone fibers such that the thermoplastic composition adheres adjoining fibers together upon cooling. In this way, an interconnected network of reinforcing fibers and a dual polymer matrix (polymer binder and polysulfone) is formed. The network so prepared has high loft and uniformity across the structure.

A method for forming a porous mat according includes forming a layer comprising a suspension of the combination of a plurality of reinforcing fibers; a plurality of polysulfone fibers; and a plurality of polymeric binder fibers in a liquid, for example an aqueous solvent; at least partially removing the liquid from the suspension to form a web; heating the web under conditions sufficient to remove any remaining aqueous solvent from the web and to melt the polymeric binder fibers but not the polysulfone; and cooling the heated web to form the porous mat, wherein the porous mat comprises a network of the reinforcing fibers and the polysulfone fibers in a matrix of the polymeric binder.

The reinforcing fibers, polysulfone fibers, and polymeric binder fibers combined in a liquid medium to form a suspension, wherein the fibers are substantially uniformly suspended and distributed throughout the medium. In an embodiment, the combining is performed by introducing the fibers into an aqueous medium to provide a suspension, which can be a slurry, dispersion, foam, or emulsion. The combining is performed so as to render the fibers substantially evenly dispersed in the aqueous medium, and can use agitation to establish and maintain the dispersion of these components. The suspension can further comprise additives such as dispersants, buffers, anti-coagulants, surfactants, and the like, and combinations thereof, to adjust or improve the flow, dispersion, adhesion, or other properties of the suspension. Specifically, the suspension can be a foamed suspension comprising the fibers, water, and a surfactant. The percentage by weight of solids (wt.%) of the suspension can be from 1 to 99 wt%, specifically 2 to 50 wt%. Additives can be present in an amount effective for imparting desired properties of foaming, suspension, flow, and the like.

The suspension can be prepared in batch mode, and used directly or stored for later use, or alternatively be formed in a continuous manufacturing process wherein the components are each combined to form the suspension at a time just prior to the use of the suspension.

To form a porous article such as a mat, the suspension is applied as a slurry to a porous surface, for example a wire mesh, and the liquid and suspended components too small to remain on the porous surface are removed through the porous surface by gravity or use of vacuum, to leave a layer comprising a dispersion of fibers on the porous surface. In an exemplary embodiment, the porous surface is a conveyor belt having pores, and of dimensions suitable to provide, after application of the dispersed medium and removal of liquid, a fibrous mat having a width of 2 meters and of continuous length. The dispersed medium can be contacted to the porous surface by distribution through a head box, which provides for application of a coating of the dispersed medium having a substantially uniform width and thickness over the porous surface. Typically, vacuum is applied to the porous surface on a side opposite the side to which the dispersed medium is applied, to draw the residual liquid and/or small particles through the porous surface, thereby providing a web in substantially dried form. In an embodiment, the layer is dried to remove moisture by passing heated air through the layer mat.

Upon removal of the excess dispersed medium and/or moisture, the non-bonded, web comprising the fibers is thermally treated to form a porous article, for example a mat. In an embodiment, the web is heated by passing heated air through the web in a furnace. In this way, the web can be dried using air heated at a temperature of greater than or equal to, e.g., 100°C under a flow of air. The heating temperature is selected to substantially soften and melt the polymer binder, but not the polysulfone, for example at a temperature from 130 to 170 °C. In an embodiment, the heating comprises heating in an oven at a temperature from 130 to 150°C, then infrared heating at a temperature from 150 to 170°C. During heating of the web, the polymer binder melts and flows to form a common contact (e.g., a bridge) between two or more of the reinforcing and polysulfone fibers, and forms an adhesive bond with the fibers upon cooling to a non-flowing state, thereby forming the porous article.

The porous article comprises a network of the plurality of reinforcing fibers and the plurality of polysulfone fibers; and a matrix deposited on the network comprising melted and cooled polymeric binder fibers, wherein the polymeric binder has a melt temperature lower than the polysulfone fibers. The porous article can have an areal weight of from 90 to 500 g/m². Alternatively, or in addition, the porous article has a porosity of greater than about 0%, more particularly about 5% to about 95%, and still more particularly about 20% to about 80% by volume

A dual matrix composite is formed from the porous article, by heating and compressing at least one of the porous articles disposed on a carrier layer under conditions sufficient to melt the polysulfone fibers and consolidate the network; and cooling the heated, compressed article and carrier layer under pressure to form the dual matrix composite comprising a network comprising a plurality of reinforcing fibers; and a matrix comprising melted and cooled polysulfone fibers and melted and cooled polymeric binder fibers, wherein the polymeric binder has a melt temperature lower than the polysulfone.

Heating is at a temperature effective to soften the polysulfone, for example a temperature of 300 to 385 °C, specifically 330 to 365 °C, and a pressure of 5 to 25 bar, specifically 8 to 15 bar. During heating of the porous article, the polysulfone softens and may flow to form a common contact (e.g., a bridge) between two or more of the reinforcing fibers, and forms an adhesive bond with the fibers upon cooling to a non-flowing state, thereby forming the dual matrix composite. Heat-treating and compression can be by a variety of methods, for example using calendaring rolls, double belt laminators, indexing presses, multiple daylight presses, autoclaves, and other such devices used for lamination and consolidation of sheets so that the polysulfone can flow and wet out the fibers. The gap between the consolidating elements in the consolidation devices may be set to a dimension less than that of the unconsolidated web and greater than that of the web if it were to be fully consolidated, thus allowing the web to expand and remain substantially permeable after passing through the rollers. In an embodiment, the gap is set to a dimension about 5% to about 10% greater than that of the web if it were to be fully consolidated. It may also be set to provide a fully consolidated web that is later re-lofted and molded to form particular articles or materials. A fully consolidated web means a web that is fully compressed and substantially void free. A fully consolidated web would have less than about 5% void content and have negligible open cell structure.

In an embodiment, the article is a mat. Two or more mats can be stacked and heated treated under compression, specifically 2 to 8 mats.

In an advantageous feature, the dual matrix composite has a minimum degree of loft of greater than or equal to three. In another advantageous feature, the loft of the dual matrix composite is within one sigma, over the entirety of the dual matrix composite. Alternatively, or in addition, the loft of the dual matrix composite is within 30%, over the entirety of the dual matrix composite. Loft can be understood as the expansion that the dual matrix composite sheet undergoes as it is reheated without pressure above the melt temperature of the polysulfone, compared to the thickness of the fully consolidated sheet. It indicates the degree of glass fiber attrition that occurred during consolidation, which provides an indication of mechanical strength and formability. Manufacturing cycle time of the dual matrix composites is shortened considerably, from several hours down to minutes.

The porosity of the dual matrix composite is generally less than about 10 volume% or is less than about 4 volume% of the porosity of the porous article, specifically less than about 3 volume %, more specifically less than about 2 volume %.

In a specific embodiment, a dual matrix composite includes a network comprising a plurality of reinforcing fibers selected from metal fibers, metallized inorganic fibers, metallized synthetic fibers, glass fibers, graphite fibers, carbon fibers, ceramic fibers, mineral fibers, basalt fibers, polymer fibers having a melt temperature at least 150 °C higher than the polysulfone, and combinations thereof; and a matrix comprising (a) melted and cooled polysulfone fibers and (b) melted and cooled polymeric binder fibers, wherein the polymeric binder has a melt temperature lower than the polysulfone, and wherein the dual matrix composite has a minimum degree of loft of greater than or equal to three and the loft of the dual matrix composite is within 30% over the entirety of the dual matrix composite. In an embodiment, the dual matrix composite does not include a perfluoroalkyl sulfonate salt, a fluoropolymer encapsulated vinylaromatic copolymer, potassium diphenylsulfone-3-sulfonate, sodium trichlorobenzenesulfonate, or a combination comprising at least one of the foregoing flame retardants.

Layers of thermoplastic material, woven and non-woven fabrics, and the like, can optionally be laminated to the dual matrix composite to form a structure having two or more layers. Lamination is effected by feeding one or more optional top layers of material, and/or one or more bottom layers of material, such as for example a scrim layer, into a nip roller simultaneously with the dual matrix composite. The nip roller, which can be cooled by circulation of water through the rollers, can provide temperature control for the heated structure during application of pressure, and thus during formation of the composite. The roller pressure for compressing and/or compacting the fibrous mat and/or additional layers can be adjusted to maximize the final properties of the structure. In this way, layers such as adhesion layers, barrier layers, scrim layers, reinforcement layers, and the like, or a combination comprising at least one of the foregoing layers, can be applied to the core material. The layers can be continuous sheets, films, woven fabric, nonwoven fabric, and the like, or a combination comprising at least one of the foregoing. Materials useful for the layers include polyolefins such as polyethylene, polypropylene, poly(ethylene-propylene), polybutylene, adhesion-modified polyethylenes, and the like; polyesters, including polyethylene terephthalate, polybutylene terephthalate, PCTG, PETG, PCCD, and the like; polyamides such as nylon 6 and nylon 6,6, and the like; polyurethanes, such as pMDI based polyurethanes; and the like; or a combination comprising at least one of the foregoing.

The dual matrix composite or layered structure prepared therefrom can be rolled, folded, or formed into sheets. The composite can be cut or rolled to an intermediate form. The cut dual matrix composite and/or the layered structure can be molded and expanded to form an article of a desired shape, for use in manufacture of further articles. The intermediate rolled, folded, or sheeted dual matrix composite or layered structure can further be molded into an article of a suitable shape, dimension, and structure for use in further manufacturing processes to produce further articles.

While any suitable method of forming an article using the dual matrix composite is contemplated (e.g., thermoforming, profile extrusion, blow molding, injection molding, and the like), in a particular embodiment, the dual matrix composite is advantageously formed into an article by thermo forming, which can reduce the overall cost in manufacturing the article. It is generally noted that the term "thermoforming" is used to describe a method that can comprise the sequential or simultaneous heating and forming of a material onto a mold, wherein the material is originally in the form of a film, sheet, layer, or the like, and can then be formed into a desired shape. Once the desired shape has been obtained, the formed article (e.g., a component of an aircraft interior such as a panel) is cooled below its melt or glass transition temperature. Exemplary thermoforming methods can include, but are not limited to, mechanical forming (e.g., matched tool forming), membrane assisted pressure/vacuum forming, membrane assisted pressure/vacuum forming with a plug assist, and the like. It can be noted the greater the draw ratio the greater the degree of lofting needs to be, to be able to form a useful part, both aesthetically and functionally.

In a particularly advantageous feature, the dual matrix composites and articles formed from the dual matrix composites meet certain flame retardant properties presently required by the airline transportation industry. In an embodiment, the dual matrix composite and articles comprising the dual matrix composite (including a thermoformed sheet and an interior airplane component, and other articles disclosed herein) can exhibit at least one of the following desirable properties: (1) a peak heat release of less than 65 kW/m², as measured by FAR 25.853 (OSU test); (2) a total heat release at 2 minutes of less than or equal to 65 kW*min/m² as measured by FAR 25.853 (OSU test), (3) an NBS (National Board of Standards) optical smoke density of less than 200 when measured at 4 minutes, based on ASTM E-662 (FAR/JAR 25.853). In an embodiment, all three of the foregoing properties are met.

In a specific embodiment, an article includes a thermoformed dual matrix composite, wherein the dual matrix composite includes a network comprising a plurality of reinforcing fibers selected from metal fibers, metallized inorganic fibers, metallized synthetic fibers, glass fibers, graphite fibers, carbon fibers, ceramic fibers, mineral fibers, basalt fibers, polymer fibers having a melt temperature at least 50 °C higher than the polysulfone, and combinations thereof; and a matrix comprising (a) melted and cooled polysulfone fibers and (b) melted and cooled polymeric binder fibers, wherein the polymeric binder has a melt temperature lower than the polysulfone, and wherein the dual matrix composite has a minimum degree of loft of greater than or equal to three and the loft of the dual matrix composite is within 30% over the entirety of the dual matrix composite; and wherein the composite exhibits (1)a time to peak release , as measured by FAR 25.853 (OSU test), (2) a 2 minute total heat release as measured by FAR 25.853 (OSU test), and (3) an NBS optical smoke density of less than 200 when measured at 4 minutes, determined in accordance with ASTM E-662 (FAR/JAR 25.853).

In another embodiment, the combustion products can be nontoxic, that is, the dual matrix composite and articles formed therefrom have toxic emissions levels to pass the requirements for toxicity described in Airbus Test Specifications ATS 1000.0001 and ABD 0031, and Boeing Standard Specification BSS 7239. In an embodiment, the dual matrix composites can have a toxic gases release of less than or equal to 100 ppm based on Draeger Tube Toxicity test (Airbus ABD0031, Boeing BSS 7239). In another embodiment, the dual matrix composites can have, as determined using a Draeger tube, for flaming conditions, less than 150 parts per million (ppm) hydrogen cyanide (HCN), less than 3,500 ppm carbon monoxide (CO), less than 100 ppm nitrogen oxides (NO and NO₂), less than 100 ppm sulfur dioxide (SO₂), and less than 150 ppm hydrogen chloride (HCl); and for non-flaming conditions, less than 150 parts per million (ppm) hydrogen cyanide (HCN), less than 3,500 ppm carbon monoxide (CO), less than 100 ppm nitrogen oxides (NO and NO₂), less than 100 ppm sulfur dioxide (SO₂), and less than 150 ppm hydrogen chloride (HCl). In still another embodiment, the dual matrix composites can have, as determined using a Draeger tube, for flaming conditions, less than 100 parts per million (ppm) hydrogen cyanide (HCN), less than 100 ppm carbon monoxide (CO), less than 100 ppm nitrogen oxides (NO and NO₂), less than 100 ppm sulfur dioxide (SO₂), and less than 100 ppm hydrogen chloride (HCl); and for non-flaming conditions, less than 100 parts per million (ppm) hydrogen cyanide (HCN), less than 100 ppm carbon monoxide (CO), less than 100 ppm nitrogen oxides (NO and NO₂), less than 100 ppm sulfur dioxide (SO₂), and less than 100 ppm hydrogen chloride (HCl).

The dual matrix composites can further have good mechanical properties.

Those skilled in the art will also appreciate that common curing and surface modification processes including but not limited to heat-setting, texturing, embossing, corona treatment, flame treatment, plasma treatment, and vacuum deposition can further be applied to the above articles to alter surface appearances and impart additional functionalities to the articles. Additional fabrication operations can be performed on articles, such as, but not limited to molding, in-mold decoration, baking in a paint oven, lamination, and hard coating.

Articles prepared from these dual matrix composites include components for a vehicle, including an interior component for a train, marine vehicle, automobile, or aircraft. For example, the articles can be used as a component of an interior panels for aircraft, trains, automobiles, passenger ships, and the like, and are useful where good thermal and sound insulation are desired. Injection-molded parts such as aircraft parts including oxygen mask compartment covers; and thermoformed and non-thermo formed articles prepared from sheets of the dual matrix composites such thermoplastic such as light fixtures; lighting appliances; light covers, cladding or seating for public transportation; cladding or seating for trains, subways, or buses; meter housings; and like applications. Other specific applications include window shades (injection molded or thermoformed), air ducts, compartments and compartment doors for storage, luggage, seat parts, arm rests, tray tables, oxygen mask compartment parts, air ducts, window trim, and other parts such as panels used in the interior of aircraft, trains or ships.

Thus in an embodiment, a composition for the manufacture of a porous, compressible article comprises a combination of: a plurality of reinforcing fibers;a plurality of polysulfone fibers; and a plurality of polymeric binder fibers; wherein the polymeric binder fibers have a melting point lower than the polysulfone fibers; optionally further comprising an aqueous solvent, optionally wherein the average fiber length of the reinforcing fibers is from 5 to 75 millimeters and the average fiber diameter of the reinforcing fibers is from 5 to 125 micrometers; the average fiber length of the polysulfone fibers is from 5 to 75 millimeters, and the average fiber diameter of the polysulfone fibers is from 5 to 125 micrometers; and the average fiber length of the polymeric binder fibers is from 2 millimeters to 25 millimeters, and the average fiber diameter of the polymeric binder fibers is from 5 to 50 micrometers. A method for forming a porous article comprises forming a layer comprising a suspension of the foregoing composition in a liquid; at least partially removing the liquid from the suspension to form a web; heating the web under conditions sufficient to remove any remaining liquid from the web and to melt the polymeric binder fibers but not the polysulfone; andcooling the heated web to form the porous article, wherein the porous article comprises a network of the reinforcing fibers and the polysulfone fibers in a matrix of the polymeric binder, optionally, wherein forming the web comprises depositing the composition dispersed in an aqueous suspension onto a forming support element to form the layer; and evacuating the aqueous solvent to form the web; optionally wherein the heating is at a temperature from130 to 170 °C.

In another embodiment, a porous article comprises a network of a plurality of reinforcing fibers and a plurality of polysulfone fibers; anda matrix deposited on the network comprising melted and cooled polymeric binder fibers, wherein the polymeric binder has a melt temperature lower than the polysulfone fibers;optionally having an areal weight of from 90 to 500 800 g/m². A method of forming a dual matrix composite comprises heating and compressing the foregoing porous article disposed on a carrier layer under conditions sufficient to melt the polysulfone fibers and consolidate the network; cooling the heated, compressed article and carrier layer under pressure to form the dual matrix composite comprising a network comprising a plurality of reinforcing fibers; and a matrix comprising melted and cooled polysulfone fibers and melted and cooled polymeric binder fibers, wherein the polymeric binder has a melt temperature lower than the polysulfone; optionally further comprising heating and compressing a stack comprising two or more of the porous articles, for example two to ten.

In another embodiment, a dual matrix, thermoformable composite comprises a network comprising a plurality of reinforcing fibers; and a matrix comprising melted and cooled polysulfone fibers and melted and cooled polymeric binder fibers, wherein the polymeric binder has a melt temperature lower than the polysulfone; optionally wherein the dual matrix composite has a minimum degree of loft of greater than or equal to three, and wherein the loft of the dual matrix composite is within one sigma, over the entirety of the dual matrix composite; optionally wherein the loft of the dual matrix composite is within 30%, over the entirety of the dual matrix composite; optionally having a porosity that is less than about 4 volume% of the porosity of the porous article; optionally having a melting point of at least 205°C. The dual matrix composite can have a peak heat release of less than 65 kW/m², as measured by FAR 25.853 (OSU test);a total heat release at 2 minutes of less than or equal to 65 kW*min/m² as measured by FAR 25.853 (OSU test); and an NBS optical smoke density of less than 200 when measured at 4 minutes, based on ASTM E-662 (FAR/JAR 25.853); optionally further having a toxic gases release of less than or equal to 100 ppm based on Draeger Tube Toxicity test in accordance with Airbus ABD0031 or Boeing BSS 7239. Such dual matrix composites can comprise from 30 to 65 wt.% of the reinforcing fibers; from 30 to 65 wt.% of the polysulfone fibers; and from 2 to 20 wt.% of the polymeric binder fibers, each based on the combined weight of the reinforcing fibers, the polysulfone fibers, and the polymeric binder fibers, wherein the plurality of reinforcing fibers can comprise metal fibers, metallized inorganic fibers, metallized synthetic fibers, glass fibers, graphite fibers, carbon fibers, ceramic fibers, mineral fibers, basalt fibers, polymer fibers having a melt temperature at least 150 °C higher than the polysulfone, or a combination thereof; and in particular glass fibers. The polysulfone can comprise at least two arylene ether sulfone units selected from 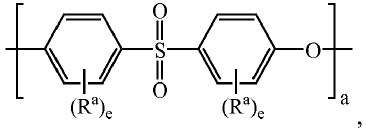 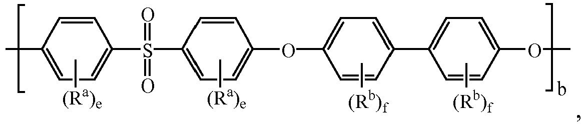 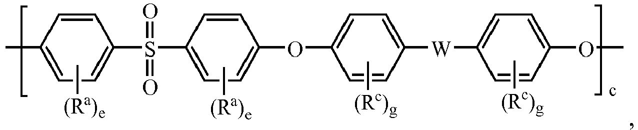 or a combination thereof, wherein R^{a}, R^{b}, and R^{c} are each independently selected from a halogen atom, a nitro group, a cyano group, a C₁-C₆ aliphatic group, and a C₃-C₁₂ aromatic group, e, f, and g are each independently 0-4; W is a C₁-C₁₂ aliphatic group, a C₃-C₁₂ cycloaliphatic group, or a C₆-C₁₈ aromatic group; and a, b, and c represent the mole fraction of each unit in the polymer, and can each be from 0 to 1 provided that the total of a + b + c = 1, for example wherein R^{a}, R^{b}, and R^{c} are each independently a halogen atom or a C₁-C₃ aliphatic group, e, f, and g are each independently 0-2; and W is a straight or branched chain C₁-C₆ alkylene or a C₃-C₁₂ cycloaliphatic group; optionally wherein the polysulfone comprises at least two units selected from 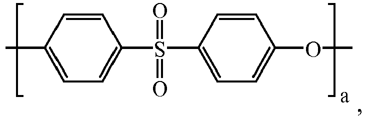 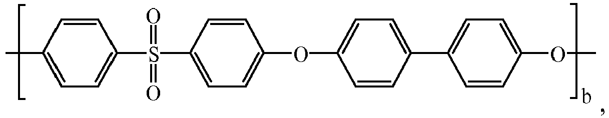 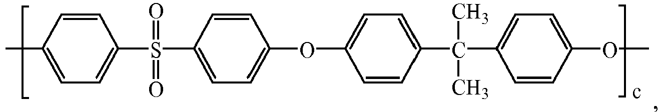 or a combination thereof. The polymeric binder can be a polymer selected from polysiloxanes, polysiloxane-polyestercarbonate copolymers, polyesters, polyester-polyetherimide blends, bicomponent fibers of the foregoing, and combinations thereof.

A method of forming an article comprises thermoforming the foregoing dual matrix composite to form the article, for example by match metal thermoforming. The article so formed can have a porosity from 30 to 75 volume% less than the porosity of the dual matrix composite prior to consolidation. The article can be an interior component of a rail vehicle, marine vehicle, or aircraft, for example an aircraft interior panel. The article can exhibit a time to peak release , as measured by FAR 25.853 (OSU test), a 2 minute total heat release as measured by FAR 25.853 (OSU test), andan NBS optical smoke density of less than 200 at 4 minutes, determined in accordance with ASTM E-662 (FAR/JAR 25.853).

The invention is further illustrated by the following non-limiting examples.

### EXAMPLES

The purpose of these Examples was to evaluate the performance of a thermoformable dual matrix composite made from a combination of (a) a fibrous filler component comprising a plurality of reinforcing fibers, (b) a fibrous polysulfone component comprising a plurality of polyphenylsulfone fibers, and (c) a binder component comprising a plurality of polymeric binder fibers having a melt temperature lower than the polyphenylsulfone fibers. In some embodiments such composites meet all of the following requirements: (1) a peak heat release of less than 65 kW/m², as measured by FAR 25.853

(OSU test); (2) a total heat release at 2 minutes of less than or equal to 65 kW*min/m² as measured by FAR 25.853 (OSU test), (3) an NBS optical smoke density of less than 200 when measured at 4 minutes, based on ASTM E-662 (FAR/JAR 25.853). The composites can also have very low toxicity, that is very low quantities of HCN, CO, NO/NO₂, SO₃, HF, and HCL as determined in accordance with Draeger tube toxicity testing of gases, performed, e.g., according to Airbus ABD0031.

The following materials were used in the Examples.

| MATERIAL | DESCRIPTION | SOURCE |
|---|---|---|
| PPS | Polyphenylenesulfone fibers 2 dernier per filament (dpf) | SABIC |
| PEI | Polyimide fibers | SABIC |
| PEI-Si | Poly(etherimide-siloxane) fibers | SABIC |
| LEXAN FST fibers | Polysiloxane-polyestercarbonate copolymer fibers with polysiloxane units having 4-50 siloxane units, and polyestercarbonate units with 50 to 100 mol% of arylate ester units, less than 50 mol% aromatic carbonate units, less than 30 mol% resorcinol carbonate units, and less than 35 mol% bisphenol A carbonate units | SABIC |
| PC141 | Nonhalogenated bisphenol A polycarbonate | SABIC |
| Fiberglass | Glass fibers | OCF |
| Carrier Layer | Lightweight (17g/m²) glass fabric (106 Weave) | BFG |

### Techniques/Procedures

### Procedure for determining peak heat release and total heat release at two minutes, as measured by FAR 25.853 (OSU test).

Heat release testing was performed using the Ohio State University (OSU) rate-of-heat release apparatus, by the method listed in FAR 25.853 (d), and in Appendix F, section IV (FAR F25.4). Peak heat release was measured as kW/m² (kilowatts per square meter). Total heat release was measured at the two minute mark in kW-min/m² (kilowatt minutes per square meter). The heat release test method is also described in the "Aircraft Materials Fire Test Handbook" DOT/FAA/AR-00/12, Chapter 5 "Heat Release Test for Cabin Materials."

Vertical burn testing was performed in accordance with in FAR 25.853 (d), and in Appendix F, section I.

### Procedure for determining the NBS optical smoke density at 4 minutes, based on ASTM E-662 (FAR/JAR 25.853).

Smoke density testing can be performed according to the method listed in FAR 25.853 (d), and in Appendix F, section V (FAR F25.5). Smoke density was measured under flaming mode. Smoke density at 4.0 minutes was determined.

### Procedure for Draeger Tube Toxicity testing.

Draeger tube toxicity of gases testing can be performed according to Airbus ABD0031 (also Boeing BSS 7238).

### Procedure for Forming a Thermoformable Dual Matrix Composite.

The dual matrix composite was made according to the following process. The reinforcing fibers, polyphenylsulfone fibers, and polymeric binder fibers (e.g., polysiloxane-polyestercarbonate copolymer fibers) were mixed in an aqueous slurry to form an aqueous suspension of the fiber mixture. The aqueous suspension was deposited on a wire mesh to form a layer, and water was drained from the layer to form a web.

The web was heated under conditions sufficient to remove any residual water and melt the polysiloxane-polyestercarbonate copolymer fibers to form a matrix (the binder fiber is included with the reinforcing and polyphenylsulfone fiber surfaces, thereby forming a porous mat.

The porous mat was then consolidated under conditions sufficient to melt the polyphenylsulfone and compress the mat to form the thermoformable dual matrix composite, such that the polyphenylsulfone melted onto the reinforcing fiber surfaces and voids were excluded by compression and cooling under pressure to provide low porosity to the finished dual matrix composite sheet.

### Test to Determining Loft of Thermoformable Dual Matrix Composite.

The following test procedure was used for determining degree of loft.
1. A 6-inch (15.2 cm) strip of the consolidated sheet was sheered for sampling. and consolidated as described above. The sample thickness was measured in six locations, the locations having been marked with a high temperature marker.
2. The samples were marked with sample number and the thickness was measured and recorded.
3. Subsequently the samples were placed in an oven at 385°C for 5 minutes.
4. After cooling, the thickness of the samples was re-measured and the ratios of the thickness after and before were recorded for each location and the average degree of lofting determined.

The degree of loft is a measure of how much the dual matrix composite sheet expands and develops porosity on reheating substantially above the melt temperature of the matrix. Without being bound by theory, it is believed that expansion of the dual matrix composite sheet is due to the reinforcing fibers being bent and trapped during consolidation and cooling. As the sheet is reheated (for example during thermoforming), the reinforcing fibers can straighten as the viscosity of the matrix resin drops with increasing temperature. The extent to which the sheet can expand during heating (loft) is an indication of how well the sheet can be thermoformed. Too high a pressure or too low a temperature during consolidation will cause excessive breakage of the reinforcing fibers, resulting in poor expansion and reduced mechanical properties. Loft does not substantially affect the FST properties of the dual matrix composite.

### Procedure for Thermoforming the Dual Matrix Composite into An Article.

The dual matrix composite sheet is cut to the desired size and clamped into a clamp frame in a thermoformer. There it is exposed to heat from an emitter to bring the sheet to the proper forming temperature, e.g., about 365°C. The tool, at a temperature of, e.g., about 175°C, is then closed around the hot sheet. After approximately 1 minute, the cooled, formed part can be removed from the tool and prepared for pulling the decorative surface film over the part.

The formed part is prepared for application of a decorative film by trimming the formed part to the final desired dimension. Additional surface treatment such as filling, sanding, and priming can be used, but in an advantageous feature, are not required. The trimmed, formed part is then returned to the vacuum side of the tool (usually the bottom half). A decorative film is placed into the clamp frame and heated to a forming temperature, e.g., 140°C to 170°C, at which point the film is pulled onto the trimmed part by bringing the trimmed part into contact with the hot film and drawing a vacuum through the lower half of the tool to remove any entrapped air. There is sufficient latent heat in the film to conform to the trimmed, formed part and bond securely to its surface. Upon cooling, the part is ready for inspection.

### Examples 1-8.

A dual matrix composite was made in accordance with the procedure above, using the compositions below. The dual matrix composites were then tested to determine peak heat release, total heat release, toxicity, and optical smoke density as described above.

**Table 1.**

| | **Ex1** | **Ex2** | **Ex3** | **Ex4** | **Ex5** | **Ex6** | **Ex7*** | **Ex8** |
|---|---|---|---|---|---|---|---|---|
| **Components, wt.%** | | | | | | | | |
| Fiberglass | 40 | 40 | 40 | 40 | 40 | 40 | 40 | 40 |
| PPSU | 50 | - | - | - | - | - | - | - |
| PEI | - | 55 | | 50 | 55 | 50 | - | 50 |
| PEI-Si | - | - | - | - | - | - | 50 | - |
| FST | 10 | 5 | 60 | 19 | | | 10 | 10 |
| PC141 | - | - | - | - | 5 | 10 | - | - |

| **Toxicity - Draeger Tube** | | | | | | | | |
|---|---|---|---|---|---|---|---|---|
| HCN (max. 150 ppm) | <1 | | <1 | <1 | <1 | | <1 | <1 |
| CO (max. 1000 ppm) | 112 | | 288 | 275 | 138 | | 200 | 100 |
| NO/NO₂ (max. 100 ppm) | 5 | | 3 | 10 | 5 | | 7 | 3 |
| SO₃ (max. 100 ppm) | 4 | | 5 | 3 | <1 | | 4 | <1 |
| HF (max. 100 ppm) | <1 | | <1 | <1 | <1 | | <1 | 4 |
| HCl (max. 150 ppm) | <1 | | <1 | <1 | <1 | | <1 | 1 |
| Pass / Fail | Pass | | Pass | Pass | Pass | | Pass | Pass |

| **Flame Performance - Vertical Burn (60 sec.)** | | | | | | | | |
|---|---|---|---|---|---|---|---|---|
| Burn Time (max. 15 sec.) | 0 | 0 | 0 | 0 | 0 | 0 | 0 | 0 |
| Burn Length (max. 6 in.) | 1.4 | 1.7 | 1.6 | 1.8 | 1.8 | 1.6 | 4.4 | 1.8 |
| Longest Burn. Particle (max. 3 sec.) | None | None | None | None | None | None | None | None |
| Pass /Fail | Pass | Pass | Pass | Pass | Pass | Pass | Pass | Pass |

| **Flame Performance - Smoke Density** | | | | | | | | |
|---|---|---|---|---|---|---|---|---|
| Ds at 1.5 m. | 2 | 3 | 11 | 0 | 4 | 10 | 32 | 0 |
| Ds at 4 m. | 18 | 21 | 86 | 16 | 36 | 78 | 113 | 13 |
| Ds Maximum | 18 | 21 | 86 | 16 | 36 | 78 | 113 | 13 |
| D max. min. (200) | 3.57 | 3.57 | 3.58 | 3.54 | 3.58 | 3.59 | 3.69 | 3.57 |
| Pass / Fail | Pass | Pass | Pass | Pass | Pass | Pass | Pass | Pass |

| **OSU Heat Release (65/65)** | | | | | | | | |
|---|---|---|---|---|---|---|---|---|
| 2 min. Total (kW/m²) | 31 | 37 | 33 | 54 | 54 | 46 | 77 | 47 |
| Peak HR (kW/m²) | 30 | 32 | 30 | 39 | 44 | 36 | 54 | 37 |
| Peak Time (sec.) | 23 | 99 | 145 | 110 | 128 | 90 | 82 | 104 |
| Melting (Y/N) | No | No | No | No | No | No | No | No |
| Sagging (Y/N) | No | No | No | No | No | No | No | No |
| Dripping (Y/N) | No | No | No | No | No | No | No | No |
| 65/65 (Pass / Fail) | Pass | Pass | Pass | Pass | Pass | Pass | Fail | Pass |

| | | | | | | | | |
|---|---|---|---|---|---|---|---|---|
| *Comparative | | | | | | | | |

As can be seen from the results in Table 1, the consolidated sheet (dual matrix composite) containing PPSU fibers (Example 1) had properties comparable to those using PEI fibers (Examples 2-6 and 8). PEI-Si fibers failed to pass the OSU Heat Release test. The sheets can exhibit all of the following properties: (1) a peak heat release of less than 65 kW/m², as measured by FAR 25.853 (OSU test); (2) a total heat release at 2 minutes of less than or equal to 65 kW*min/m² as measured by FAR 25.853 (OSU test); and (3) an NBS optical smoke density of less than 200 when measured at 4 minutes, based on ASTM E-662 (FAR/JAR 25.853). The dual matrix composites containing PPSU fibers can have a minimum degree of loft of greater than or equal to three.

Dual matrix composites andhermoformed articles can be made from the dual matrix composites and the thermoformed articles can exhibit all of the following properties: (1) a peak heat release of less than 65 kW/m², as measured by FAR 25.853 (OSU test); (2) a total heat release at 2 minutes of less than or equal to 65 kW*min/m² as measured by FAR 25.853 (OSU test); and (3) an NBS optical smoke density of less than 200 when measured at 4 minutes, based on ASTM E-662 (FAR/JAR 25.853). Formability and mechanical strength can be acceptable as well.

## Claims

1. A composition for the manufacture of a porous, compressible article, the composition comprising a combination of:
from 30 to 65 wt.% of reinforcing fibers, having average fiber length of from 5 to 75 millimeters, and average fiber diameter of from 5 to 125 micrometers;
from 30 to 65 wt.% of polysulfone fibers, having average fiber length of from 5 to 75 millimeters, and average fiber diameter of from 5 to 125 micrometers; and
from 2 to 20 wt.% of polymeric binder fibers, having average fiber length of from 2 millimeters to 25 millimeters, and average fiber diameter of from 5 to 50 micrometers;
dispersed as a network in an aqueous solvent;
wherein the polymeric binder fibers have a melting point lower than the polysulfone fibers.

2. A porous article comprising:
a network of discontinuous, randomly oriented reinforcing fibers and polysulfone fibers; bonded together by melted fibers of the polymer binder, obtained by heating the composition of claim 1 under conditions sufficient to remove any remaining liquid and to melt the polymeric binder fibers but not the polysulfone, and having an areal weight of from 90 to 500 g/m².

3. A dual matrix, thermoformable composite, comprising:
a network comprising a plurality of reinforcing fibers; and
a matrix comprising melted and cooled polysulfone fibers and melted and cooled polymeric binder fibers, obtained by heating the porous article of claim 2 under compression, to a temperature sufficient to melt the polysulfone, and thereby form the dual matrix composite.

4. The dual matrix composite of claim 3, wherein the dual matrix composite has a minimum degree of loft of greater than or equal to three, and wherein the loft of the dual matrix composite is within one sigma, over the entirety of the dual matrix composite.

5. The dual matrix composite of claim 3 or 4, wherein the loft of the dual matrix composite is within 30%, over the entirety of the dual matrix composite.

6. The dual matrix composite of any one of claims 3 to 5, having:
a peak heat release of less than 65 kW/m², as measured by FAR 25.853 (OSU test);
a total heat release at 2 minutes of less than or equal to 65 kW*min/m² as measured by FAR 25.853 (OSU test); and
an NBS optical smoke density of less than 200 when measured at 4 minutes, based on ASTM E-662 (FAR/JAR 25.853).

7. The dual matrix composite of any one of claims 3 to 6, further having a toxic gases release of less than or equal to 100 ppm based on Draeger Tube Toxicity test in accordance with Airbus ABD0031 or Boeing BSS 7239.

8. The dual matrix composite of any one of claims 3 to 7, wherein the polysulfone comprises at least two arylene ether sulfone units selected from 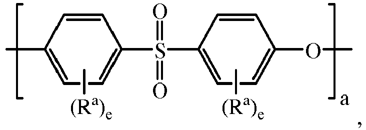 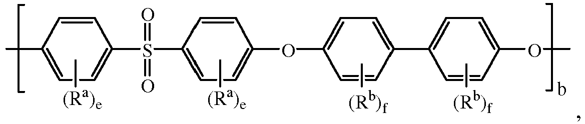 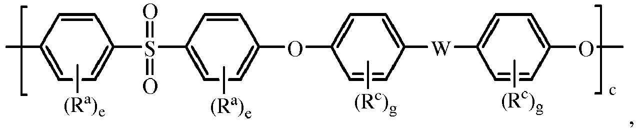 or a combination thereof, wherein
R^{a}, R^{b}, and R^{c} are each independently selected from a halogen atom, a nitro group, a cyano group, a C₁-C₆ aliphatic group, and a C₃-C₁₂ aromatic group,
e, f, and g are each independently 0-4;
W is a C₁-C₁₂ aliphatic group, a C₃-C₁₂ cycloaliphatic group, or a C₆-C₁₈ aromatic group; and
a, b, and c represent the mole fraction of each unit in the polymer, and can each be from 0 to 1 provided that the total of a + b + c = 1.

9. The dual matrix composite of any one or more of claims 3 to 8, wherein the polymeric binder is a polymer selected from polysiloxanes, polysiloxane-polyestercarbonate copolymers, polyesters, polyester-polyetherimide blends, bicomponent fibers of the foregoing, and combinations thereof.

10. An article, comprising the thermoformed dual matrix composite of any one of claims 3 to 9.

11. The article of claim 10, wherein the articles is an interior component of a rail vehicle, marine vehicle, or aircraft.

12. The article of claim 11 in the form of an aircraft interior panel.

13. An article comprising a thermoformed dual matrix composite of any one of claims 3 to 9, wherein the composite exhibits
a time to peak release , as measured by FAR 25.853 (OSU test),
a 2 minute total heat release as measured by FAR 25.853 (OSU test), and
an NBS optical smoke density of less than 200 at 4 minutes, determined in accordance with ASTM E-662 (FAR/JAR 25.853).

14. A method for forming a porous article, the method comprising:
forming a layer comprising a suspension of the composition of claim 1in a liquid;
at least partially removing the liquid from the suspension to form a web;
heating the web under conditions sufficient to remove any remaining liquid from the web and to melt the polymeric binder fibers but not the polysulfone; and
cooling the heated web to form the porous article, wherein the porous article comprises a network of the reinforcing fibers and the polysulfone fibers in a matrix of the polymeric binder.

15. A method of forming a dual matrix composite, the method comprising:
heating and compressing the porous article of claim 2, disposed on a carrier layer under conditions sufficient to melt the polysulfone fibers and the binder fibers and consolidate the network;
cooling the heated, compressed article and carrier layer under pressure to form the dual matrix composite comprising
a network comprising a plurality of reinforcing fibers; and
a matrix comprising melted and cooled polysulfone fibers and melted and cooled polymeric binder fibers, wherein the polymeric binder has a melt temperature lower than the polysulfone.

## Patentansprüche

1. Zusammensetzung zur Herstellung eines porösen komprimierbaren Gegenstands, wobei die Zusammensetzung eine Kombination aus Folgendem umfasst:
30 bis 65 Gew.-% an verstärkenden Fasern, mit einer durchschnittlichen Faserlänge von 5 bis 75 Millimeter und einem durchschnittlichen Faserdurchmesser von 5 bis 125 Mikrometer;
30 bis 65 Gew.-% an Polysulfonfasern, mit einer durchschnittlichen Faserlänge von 5 bis 75 Millimeter und einem durchschnittlichen Faserdurchmesser von 5 bis 125 Mikrometer; und
2 bis 20 Gew.-% an Fasern aus polymerartigem Bindemittel, mit einer durchschnittlichen Faserlänge von 2 Millimeter bis 25 Millimeter und einem durchschnittlichen Faserdurchmesser von 5 bis 50 Mikrometer;
dispergiert in Form eines Netzwerks in einem wässrigen Lösungsmittel; wobei die Fasern aus polymerartigem Bindemittel einen niedrigeren Schmelzpunkt als die Polysulfonfasern haben.

2. Poröser Gegenstand, der Folgendes umfasst:
ein Netzwerk aus diskontinuierlichen, zufällig ausgerichteten verstärkenden Fasern und Polysulfonfasern; miteinander verbunden durch geschmolzene Fasern des polymerartigen Bindemittels, wobei dieses erhalten wurde, indem die Zusammensetzung nach Anspruch 1 unter Bedingungen erwärmt wurde, die ausreichen, um jedwede verbleibende Flüssigkeit zu entfernen und die Fasern aus polymerartigem Bindemittel zu schmelzen, nicht jedoch das Polysulfon, wobei es ein Flächengewicht von 90 bis 500 g/m² hat.

3. Thermoformbarer Verbundwerkstoff mit dualer Matrix, der Folgendes umfasst:
ein Netzwerk, das mehrere verstärkende Fasern umfasst; und
eine Matrix, die geschmolzene und abgekühlte Polysulfonfasern sowie geschmolzene und abgekühlte Fasern aus polymerartigem Bindemittel umfasst, wobei diese erhalten wurde, indem der poröse Gegenstand nach Anspruch 2 unter Druckeinwirkung auf eine Temperatur erwärmt wurde, die ausreicht, um das Polysulfon zu schmelzen und auf diese Weise den Verbundwerkstoff mit dualer Matrix zu bilden.

4. Verbundwerkstoff mit dualer Matrix nach Anspruch 3, wobei der Verbundwerkstoff mit dualer Matrix einen Dickenzunahmefaktor von mindestens drei aufweist und wobei die Dickenzunahme des Verbundwerkstoffs mit dualer Matrix über den gesamten Verbundwerkstoff mit dualer Matrix hinweg um höchstens eine Standardabweichung (Sigma) schwankt.

5. Verbundwerkstoff mit dualer Matrix nach Anspruch 3 oder 4, wobei die Dickenzunahme über den gesamten Verbundwerkstoff mit dualer Matrix hinweg um höchstens 30 % schwankt.

6. Verbundwerkstoff mit dualer Matrix nach einem beliebigen der Ansprüche 3 bis 5, wobei er Folgendes aufweist:
einen Spitzenwert der Wärmefreisetzung von weniger als 65 kW/m², bei einer Messung mittels FAR 25.853 (OSU-Test);
einen Gesamtwert der Wärmefreisetzung nach 2 Minuten von höchstens 65 kW*min/m², bei einer Messung mittels FAR 25.853 (OSU-Test); und
einen NBS-Wert der optischen Rauchdichte von weniger als 200, bei einer Messung nach 4 Minuten, gemäß ASTM E-662 (FAR/JAR 25.853).

7. Verbundwerkstoff mit dualer Matrix nach einem beliebigen der Ansprüche 3 bis 6, wobei er weiterhin eine Freisetzung toxischer Gase von höchstens 100 ppm gemäß der Toxizitätsprüfung im Dräger-Röhrchen in Übereinstimmung mit Airbus ABD0031 oder Boeing BSS 7239 aufweist.

8. Verbundwerkstoff mit dualer Matrix nach einem beliebigen der Ansprüche 3 bis 7, wobei das Polysulfon mindestens zwei Arylenethersulfon-Einheiten umfasst, die aus den folgenden 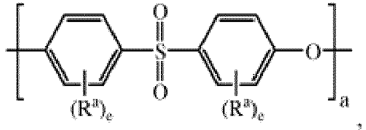 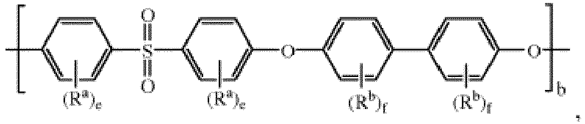 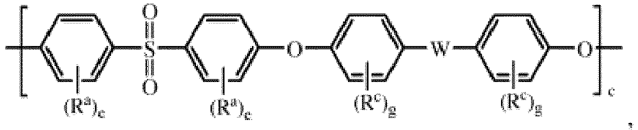 oder einer Kombination derselben ausgewählt sind, wobei
R^{a}, R^{b} und R^{c} jeweils auf unabhängige Weise aus einem Halogenatom, einer Nitrogruppe, einer Cyanogruppe, einer aliphatischen C₁-C₆-Gruppe und einer aromatischen C₃-C₁₂-Gruppe ausgewählt sind,
e, f und g jeweils auf unabhängige Weise Werte von 0 bis 4 annehmen; W für eine aliphatische C₁-C₁₂-Gruppe, eine cycloaliphatische C₃-C₁₂-Gruppe oder eine aromatische C₆-C₁₈-Gruppe steht; und
a, b und c den Molanteil jeder einer Einheiten in dem Polymer angeben, wobei sie jeweils Werte von 0 bis 1 annehmen können, mit der Maßgabe, dass der Gesamtwert von a + b + c = 1 ist.

9. Verbundwerkstoff mit dualer Matrix nach einem beliebigen der Ansprüche 3 bis 8, wobei es sich bei dem polymerartigen Bindemittel um ein Polymer handelt, das aus den Polysiloxanen, Polysiloxan-Polyestercarbonat-Copolymeren, Polyestern, Polyester-Polyetherimid-Mischungen, den Zweikomponenten-Fasern der vorstehend genannten sowie aus deren Kombinationen ausgewählt ist.

10. Gegenstand, der den thermogeformten Verbundwerkstoff mit dualer Matrix nach einem beliebigen der Ansprüche 3 bis 9 umfasst.

11. Gegenstand nach Anspruch 10, wobei es sich bei dem Gegenstand um ein Innenausstattungsteil eines Schienenfahrzeugs, eines Meeresfahrzeugs oder eines Luftfahrzeugs handelt.

12. Gegenstand nach Anspruch 11 in Form eines Innenverkleidungselements für Luftfahrzeuge.

13. Gegenstand, der einen thermogeformten Verbundwerkstoff mit dualer Matrix nach einem beliebigen der Ansprüche 3 bis 9 umfasst, wobei der Verbundwerkstoff Folgendes aufweist
einen Zeitraum bis zum Spitzenwert der Freisetzung, wobei die Messung mittels FAR 25.853 (OSU-Test) erfolgt,
einen Gesamtwert der Wärmefreisetzung nach 2 Minuten, wobei die Messung mittels FAR 25.853 (OSU-Test) erfolgt, und
einen NBS-Wert der optischen Rauchdichte von weniger als 200 nach 4 Minuten, wobei die Bestimmung gemäß ASTM E-662 (FAR/JAR 25.853) erfolgt.

14. Verfahren zur Bildung eines porösen Gegenstands, wobei das Verfahren Folgendes umfasst:
Bilden einer Schicht, die eine Suspension der Zusammensetzung nach Anspruch 1 in einer Flüssigkeit umfasst;
zumindest teilweises Entfernen der Flüssigkeit aus der Suspension, um eine Fasermatte zu bilden;
Erwärmen der Fasermatte unter Bedingungen, die ausreichen, um jedwede verbleibende Flüssigkeit aus der Fasermatte zu entfernen und die Fasern des polymerartigen Bindemittels, nicht jedoch das Polysulfon, zu schmelzen; und
Abkühlen der erwärmten Fasermatte, um den porösen Gegenstand zu bilden, wobei der poröse Gegenstand ein Netzwerk aus den verstärkenden Fasern und den Polysulfonfasern in einer Matrix aus dem polymerartigen Bindemittel umfasst.

15. Verfahren zur Bildung eines Verbundwerkstoffs mit dualer Matrix, wobei das Verfahren Folgendes umfasst:
Erwärmen und Komprimieren des porösen Gegenstands nach Anspruch 2, der auf einer Trägerschicht angeordnet ist, unter Bedingungen, die ausreichen, um die Polysulfonfasern und die Fasern des Bindemittels zu schmelzen und das Netzwerk zu verfestigen;
Abkühlen des erwärmten, komprimierten Gegenstands und der Trägerschicht unter Druckeinwirkung, um den Verbundwerkstoff mit dualer Matrix zu bilden, welcher folgendes umfasst
ein Netzwerk, das mehrere verstärkende Fasern umfasst; und
eine Matrix, die geschmolzene und abgekühlte Polysulfonfasern sowie geschmolzene und abgekühlte Fasern aus polymerartigem Bindemittel umfasst, wobei das polymerartige Bindemittel eine niedrigere Schmelztemperatur als das Polysulfon aufweist.

## Revendications

1. Composition pour la confection d'un article poreux compressible, la composition comprenant une combinaison :
de 30 à 65 % en poids de fibres de renforcement possédant une longueur de fibre moyenne de 5 à 75 mm et un diamètre de fibre moyen de 5 à 125 µm ;
de 30 à 65 % en poids de fibres de polysulfone possédant une longueur de fibre moyenne de 5 à 75 mm et un diamètre de fibre moyen de 5 à 125 µm ; et
de 2 à 20 % en poids de fibres polymères faisant office de liant possédant une longueur de fibre moyenne de 2 mm à 25 mm et un diamètre de fibre moyen de 5 à 50 µm ;
dispersées sous la forme d'un réseau dans un solvant aqueux ;
les fibres polymères faisant office de liant possédant un point de fusion inférieur à celui des fibres de polysulfone.

2. Article poreux comprenant :
un réseau de fibres de renforcement et de fibres de polysulfone discontinues, orientées de manière aléatoire, liées les unes aux autres via des fibres en fusion du liant polymère, que l'on obtient en chauffant la composition selon la revendication 1 dans des conditions suffisantes pour l'élimination de toute quantité de liquide résiduel et pour porter à fusion les fibres polymères faisant office de liant, mais non la polysulfone, et possédant un poids surfacique de 90 à 500 g/m².

3. Composite thermoformable à double matrice, comprenant :
un réseau comprenant plusieurs fibres de renforcement ; et
une matrice comprenant des fibres de polysulfone portées à fusion et refroidies et des fibres polymères faisant office de liant, portées à fusion et refroidies, que l'on obtient en chauffant l'article poreux selon la revendication 2 sous compression, jusqu'à une température suffisante pour la mise en fusion de la polysulfone et ainsi obtenir le composite à double matrice.

4. Composite à double matrice selon la revendication 3, dans lequel le composite à double matrice possède un degré minimal de gonflant supérieur ou égal à trois et dans lequel le gonflant du composite à double matrice se situe en deçà d'un sigma sur l'entièreté du composite à double matrice.

5. Composite à double matrice selon la revendication 3 ou 4, dans lequel le gonflant du composite à double matrice se situe en deçà de 30 % sur l'entièreté du composite à double matrice.

6. Composite à double matrice selon l'une quelconque des revendications 3 à 5, possédant :
un dégagement de chaleur maximal inférieur à 65 kW/m², tel qu'on le mesure via le procédé FAR 25.853 (test OSU) ;
un dégagement de chaleur total à 2 minutes inférieur ou égal à 65 kW*/m², tel qu'on le mesure via le procédé FAR 25.853 (test OSU) ; et
une densité optique de fumée NBS inférieure à 200 lorsqu'on la mesure à 4 minutes, en se basant sur la norme ASTM E-662 (FAR/JAR 25.853).

7. Composite à double matrice selon l'une quelconque des revendications 3 à 6, possédant en outre un dégagement de gaz toxiques inférieur ou égal à 100 ppm en se basant sur le test Draeger Tube Toxicity conformément à Airbus ABD0031 ou Boeing BSS 7239.

8. Composite à double matrice selon l'une quelconque des revendications 3 à 7, dans lequel la polysulfone comprend au moins deux unités d'arylène éther sulfone choisies parmi : 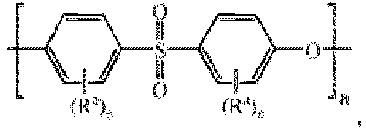 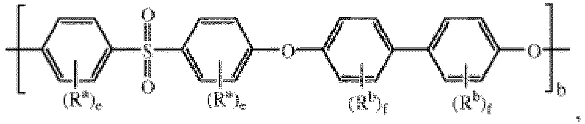 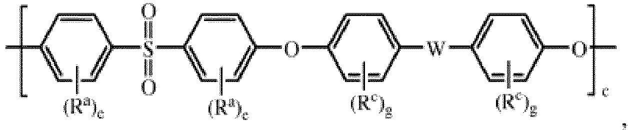 ou une de leurs combinaisons, unités dans lesquelles
R^{a}, R^{b} et R^{c} sont choisis, chacun de manière indépendante, parmi un atome d'halogène, un groupe nitro, un groupe cyano, un groupe aliphatique en C₁-C₆ et un groupe aromatique en C₃-C₁₂;
e, f et g sont, chacun de manière indépendante, de 0 - 4 ;
W représente un groupe aliphatique en C₁-C₁₂, un groupe cycloaliphatique en C₃-C₁₂ ou un groupe aromatique en C₆-C₁₈; et
a, b, et c représentent la fraction molaire de chaque unité dans le polymère et peuvent être chacun égaux à 0 - 1, avec cette condition que le total de a + b + c = 1.

9. Composite à double matrice selon une ou plusieurs des revendications 3 à 8, dans lequel le liant polymère est un polymère choisi parmi des polysiloxanes, des copolymères de polysiloxane-polyestercarbonate, des polyesters, des mélanges de polyester-polyétherimide, des fibres à deux composants des polymères indiqués ci-dessus, ainsi que leurs combinaisons.

10. Article comprenant le composite à double matrice obtenu par thermoformage selon l'une quelconque des revendications 3 à 9.

11. Article selon la revendication 10, dans lequel l'article représente un composant interne d'un véhicule sur rail, d'un véhicule marin ou d'un aéroplane.

12. Article selon la revendication 11, sous la forme d'un revêtement intérieur pour aéroplane.

13. Article comprenant un composite à double matrice obtenu par thermoformage selon l'une quelconque des revendications 3 à 9, dans lequel le composite manifeste :
un délai jusqu'au dégagement maximal, tel qu'on le mesure via le procédé FAR 25.853 (test OSU) ;
un dégagement de chaleur total de 2 minutes, tel qu'on le mesure via le procédé FAR 25.853 (test OSU) ; et
une densité optique de fumée NBS inférieure à 200 à 4 minutes, déterminée conformément à la norme ASTM E-662 (FAR/JAR 25.853).

14. Procédé pour la confection d'un article poreux, le procédé comprenant le fait de :
former une couche comprenant une suspension de la composition selon la revendication 1 dans un liquide ;
retirer au moins en partie le liquide de la suspension pour obtenir une bande ;
chauffer la bande dans des conditions suffisantes pour éliminer toute quantité de liquide résiduel à partir de la bande et pour porter à fusion les fibres polymères faisant office de liant, mais non la polysulfone ;
refroidir la bande chauffée pour obtenir l'article poreux, l'article poreux comprenant un réseau des fibres de renforcement et des fibres de polysulfone dans une matrice du liant polymère.

15. Procédé de formation d'un composite à double matrice, le procédé comprenant le fait de :
chauffer et comprimer l'article poreux selon la revendication 2, disposé sur une couche de support, dans des conditions suffisantes pour porter à fusion les fibres de polysulfone et les fibres faisant office de liant et pour consolider le réseau ;
refroidir sous pression l'article et la couche de support comprimés, chauffés pour obtenir le composite à double matrice comprenant :
un réseau comprenant plusieurs fibres de renforcement ; et
une matrice comprenant des fibres de polysulfone portées à fusion et refroidies et des fibres polymères faisant office de liant portées à fusion et refroidies, le liant polymère possédant une température de fusion inférieure à celle de la polysulfone.
